# DEMANDE DE BREVET EUROPEEN

(11) **EP 4 671 160 A1**
(43) Date de publication de la demande: **31.12.2025**
(21) Numéro de dépôt: 25184329.8
(22) Date de dépôt: 20.06.2025
(51) Int. Cl.: B65G 13/11, B65G 21/00, B65G 21/06, B65G 39/12, B65G 13/07

(54) **PIÈCE DE PROTECTION POUR UN CONVOYEUR**

(30) Priorité: 25.06.2024 FR 2406809
(71) Demandeur: Exotec Product France, 59170 Croix (FR)
(72) Inventeur: CAGNAC, Bastien, 59170 CROIX (FR); FRELIEZ, Jérémie, 59650 VILLENEUVE D'ASCQ (FR); VIVES, Damien, 59170 CROIX (FR)
(74) Mandataire: Plasseraud IP

(57) **Abrégé**

L'invention concerne une pièce de protection (10), destinée à équiper un convoyeur comprenant :
- deux profilés latéraux entre lesquels une pluralité de rouleaux s'étendent transversalement,
- chaque rouleau étant monté pivotant sur les profilés latéraux via un arbre de montage, l'un au moins des rouleaux étant motorisé,
- au moins une courroie d'entraînement reliant deux des rouleaux , et définissant des zones de pincement,
ladite pièce de protection (10) comprenant :
- une embase (11) comprenant une ouverture (111) traversée par l'arbre du rouleau, l'embase (11) étant alors intercalée entre le rouleau et le profilé,
- deux parois de protection (12) s'étendant de part et d'autre dudit rouleau (2) depuis ladite embase (11), pour empêcher l'accès aux zones de pincement,
- un moyen de fixation (14) pour maintenir ladite pièce de protection (10) sur le profilé latéral.

## Description

### Domaine technique

Le domaine de la présente divulgation est celui des convoyeurs, notamment les convoyeurs présents dans des entrepôts de préparation de commande.

### Technique antérieure

Pour le transport de commandes, il est connu d'utiliser des convoyeurs à rouleaux. De manière générale, les convoyeurs comprennent une structure comprenant deux profilés latéraux, sur lesquels des rouleaux sont montés rotatifs. Les rouleaux sont typiquement agencés parallèles entre eux, disposés entre les profilés latéraux, les rouleaux pouvant par exemple être montés chacun pivotant autour d'un arbre fixe. Des portions d'extrémité de l'arbre dépassent aux deux extrémités longitudinales du rouleau, et viennent se fixer respectivement sur les deux profilés, en pénétrant respectivement au travers d'ouvertures ménagées dans les profilés latéraux. L'un des rouleaux est typiquement entraîné en rotation par un actionneur, et sa rotation est transmise aux autres rouleaux par des courroies reliant les rouleaux deux à deux. Ainsi, les espaces entre les brins supérieurs ou inférieurs des courroies et les rouleaux constituent des zones de pincement. Ces convoyeurs sont souvent accessibles par des opérateurs pour la préparation des commandes, et il subsiste un risque de blessure au niveau de ces zones de pincement, en particulier au niveau des zones où la courroie et le rouleau peuvent entraîner le doigts à l'écrasement contre le rouleau.

Par mesure de sécurité, ces types de convoyeur sont soumis à une norme qui oblige de protéger ces zones. Il existe aujourd'hui des solutions pour répondre à ces exigences.

Le document EP3959157 décrit un premier type d'élément de protection pour convoyeur : le convoyeur comprenant deux rouleaux adjacents, reliés entre eux par une courroie d'entrainement. L'élément de protection est maintenu flottant en correspondance géométrique entre les deux rouleaux adjacents et comprend en outre une proéminence sur sa partie supérieure, qui remplit l'espace entre les deux rouleaux adjacents et la courroie d'entraînement.

Un élément de protection similaire est décrit dans le document US20230102050. Dans ce document, l'élément de protection est mis en prise par encliquetage entre les deux rouleaux adjacents et comprend une partie supérieure conçue pour réduire l'espace entre deux rouleaux adjacents et la courroie d'entrainement reliant ces rouleaux entre eux. L'élément de protection comprend en outre une rainure agencée pour recevoir la courroie d'entrainement.

Ce type d'élément de protection agencé entre deux rouleaux adjacents présente notamment l'inconvénient de ne pas pouvoir s'adapter aux différents écartements entre deux rouleaux.

Un autre type d'élément de protection est connu notamment du document EP3699113. Dans ce cas, l'élément de protection comprend une embase dans laquelle est ménagée une encoche débouchant sur un bord inférieur de l'embase et comprenant un logement en forme d'arc dont le diamètre est adapté à celui de l'arbre du rouleau, l'encoche étant configurée pour se clipper sur l'arbre du rouleau. L'élément de protection comprend en outre une surface supérieure pour combler l'espace entre le rouleau et une courroie d'entraînement en prise autour dudit rouleau. De plus, l'élément de protection comprend des moyens d'accroche latéraux lui permettant de se connecter à deux autres éléments de protection montés sur les rouleaux adjacents, assurant ainsi une fonction de blocage en rotation des éléments de protection entre eux.

Cette solution présente l'avantage de pouvoir être montée facilement sur un rouleau déjà en place sur le profilé latéral. Cela dit, elle ne remplit pas pleinement sa fonction sécuritaire car son maintien en position est assuré par clippage sur le rouleau, ce qui n'empêche pas un démontage fortuit de l'élément de protection. Par ailleurs, une telle solution n'est pas adaptée pour être applicable à différentes valeurs d'entraxe des rouleaux, à moins d'adapter les moyens d'accroche des pièces de protection pour les lier entre elles et les maintenir en place.

Le document DE102019101473 décrit un élément de protection pour rouleau de convoyeur, en forme de U, comprenant une plaque de support et deux plaques de couverture parallèles entre elles et clipsables sur la plaque de support. La plaque de support est pourvue d'une ouverture centrale hexagonale qui permet de la fixer à l'extrémité de l'arbre du rouleau, lui aussi hexagonal, les deux plaques de couverture recouvrant alors partiellement le rouleau de convoyeur pour éviter le pincement. Cet élément de protection avec les plaques de couverture amovibles permet de changer facilement l'emplacement des rouleaux, puisque l'élément de protection n'est pas fixé sur le profilé du convoyeur. Cependant, la plaque de support n'étant maintenue en position que par l'axe du rouleau qui traverse son ouverture centrale, en cas d'usure, il existe un risque que l'élément de protection se décale angulairement et vienne au contact de la courroie d'entrainement reliant deux rouleaux entre eux.

La présente divulgation a donc pour objectif de pallier au moins en partie les inconvénients de l'état de la technique cités ci-dessus.

En particulier, un objectif de la présente divulgation est de proposer une solution qui permet de protéger efficacement les zones entre la courroie et le rouleau qui présentent un risque de pincement. De plus, la solution proposée vise à ne pas pouvoir être démontée de façon imprévue, et vise à pouvoir être installée indépendamment de la valeur d'entraxe des rouleaux.

### Résumé

Les objectifs mentionnés ci-dessus sont atteints notamment par une pièce de protection destinée à équiper un convoyeur, le convoyeur comprenant :
- une structure comportant deux profilés latéraux entre lesquels une pluralité de rouleaux s'étendent transversalement,
- l'un au moins des rouleaux est entraîné en rotation par un moteur, chaque rouleau comportant une surface de roulement et des flancs, chaque rouleau étant monté pivotant par rapport aux profilés latéraux via un arbre de montage, l'arbre de montage comportant des portions d'extrémités en saillie des deux flancs aux extrémités du rouleau,
- au moins une courroie d'entraînement reliant deux des rouleaux, la courroie comprenant un brin supérieur et un brin inférieur, et, en particulier, pour chaque rouleau, les espaces entre le brin supérieur et le brin inférieur de chaque courroie et le rouleau définissant des zones de pincement,
ladite pièce de protection comprenant :
- une embase comprenant une ouverture configurée pour être traversée par l'une des portions d'extrémités d'un des arbres de montage de l'un des rouleaux, l'embase étant intercalée entre l'un des flancs du rouleau et l'un des deux profilés latéraux,
- deux parois de protection s'étendant en saillie depuis ladite embase suivant la direction d'élongation du rouleau, chacune desdites parois de protection s'étendant de part et d'autre dudit rouleau, entre le brin inférieur et le brin supérieur de chacune des courroies, de sorte à empêcher l'accès aux zones de pincement dudit rouleau, et
- un moyen de fixation configuré pour maintenir ladite pièce de protection sur un profilé latéral du convoyeur.

Ainsi, de façon particulièrement efficace, les parois de protection assurent une barrière physique autour des zones de pincement situées entre les brins supérieur et inférieur des courroies en prise sur le rouleau.

De plus, la pièce de protection, qui dispose à la fois d'une ouverture traversée par l'arbre du rouleau, et d'un moyen de fixation sur le profilé latéral qui la maintient en une position intercalée entre le profilé latéral et un flanc du rouleau, ne peut être démontée de façon fortuite. En effet, la conception de la pièce de protection rend nécessaire, pour la démonter, de démonter d'abord le rouleau.

La pièce de protection étant en outre pourvue d'un moyen de fixation assurant son maintien sur le profilé, il n'est pas utile de prévoir que l'ouverture, traversée par l'arbre du rouleau, participe au maintien de la pièce sur le profilé.

Les caractéristiques exposées dans les paragraphes suivants peuvent, optionnellement, être mises en œuvre, indépendamment les unes des autres ou en combinaison les unes avec les autres :
Selon un perfectionnement, l'embase, les deux parois de protection, et le cas échéant le moyen de fixation de la pièce de protection, font partie d'un corps monobloc.

Selon un perfectionnement, le contour de ladite ouverture de l'embase est de section fermée.

Selon un perfectionnement, l'embase comporte une rainure en sur-profondeur d'une paroi de l'embase faisant face au flanc du rouleau, ladite rainure s'étendant suivant une direction médiane aux deux parois de protection.

Selon un perfectionnement, les parois de protection comprennent chacune une face interne configurée pour être positionnée en vis-à-vis dudit rouleau, ladite face interne de chacune des parois de protection étant concave. De cette façon, la face interne « épouse » la forme extérieure du rouleau.

Selon un perfectionnement, le moyen de fixation est configuré pour coopérer avec une zone d'accroche sur le profilé latéral, ladite zone d'accroche comportant un contour fermé, le moyen de fixation coopérant avec la zone d'accroche par une déformation élastique induite par un mouvement de translation de la pièce de protection selon la direction d'élongation du rouleau. De cette façon, le montage et le démontage de la pièce de protection s'opèrent selon une direction parallèle à la longueur du rouleau. Selon des exemples, la coopération du moyen de fixation avec la zone d'accroche s'effectue par emboîtement, par enfoncement, ou encore par un ajustement serré.

Selon un perfectionnement, le moyen de fixation comporte deux organes d'accroche chacun situé de part et d'autre de l'ouverture de l'embase, les organes d'accroche étant saillants de l'embase du côté de l'embase opposé aux deux parois de protection, chacun des deux organes d'accroche étant configuré pour coopérer avec une zone d'accroche du profilé latéral.

Selon un perfectionnement, chaque organe d'accroche comprend une dent orientée l'une vers l'autre, chaque dent étant configurée pour coopérer avec un contour de la zone d'accroche correspondante, chaque organe d'accroche s'étendant dans la continuité d'une paroi de protection de façon qu'un rapprochement des deux parois de protection engendre un écartement des deux dents l'une par rapport à l'autre. Ainsi, l'opération de montage et de démontage de la pièce de protection est facilitée en ce qu'elle ne nécessite aucun outil.

Selon un perfectionnement, la pièce de protection est réalisée par injection de matière plastique.

La présente divulgation concerne en outre un convoyeur comprenant une pièce de protection telle que décrite précédemment, le convoyeur comprenant :
- une structure comportant deux profilés latéraux entre lesquels une pluralité de rouleaux s'étendent transversalement,
- l'un au moins des rouleaux est entraîné en rotation par un moteur, chaque rouleau comportant une surface de roulement et des flancs, chaque rouleau étant monté pivotant par rapport aux profilés latéraux via un arbre de montage, l'arbre de montage comportant des portions d'extrémités en saillie des deux flancs aux extrémités du rouleau,
- au mois une courroie d'entraînement reliant deux des rouleaux, la courroie comprenant un brin supérieur et un brin inférieur, et, en particulier, pour chaque rouleau, les espaces entre le brin supérieur et le brin inférieur de chaque courroie et le rouleau définissant des zones de pincement.
ladite pièce de protection étant montée sur le convoyeur, et comprenant :
- une embase comprenant une ouverture traversée par l'une des portions d'extrémités d'un des arbres de montage de l'un des rouleaux, l'embase étant intercalée entre l'un des flancs du rouleau et l'un des deux profilés latéraux,
- deux parois de protection s'étendant en saillie depuis ladite embase suivant la direction d'élongation du rouleau, chacune desdites parois de protection s'étendant de part et d'autre dudit rouleau, entre le brin inférieur et le brin supérieur de chacune des courroies, de sorte à empêcher l'accès aux zones de pincement dudit rouleau, et
- un moyen de fixation maintenant ladite pièce de protection sur le profilé latéral du convoyeur.

De façon particulièrement efficace, la pièce de protection est configurée de sorte que son démontage nécessite le démontage préalable, au moins partiel, dudit rouleau des profilés latéraux.

Selon un perfectionnement, le contour de l'ouverture de l'embase de la pièce de protection est en tout point distant de la portion d'extrémité de l'arbre de montage du rouleau, préférentiellement d'une distance comprise entre 0,5 et 6 mm.

Selon un perfectionnement, les parois de protection de ladite pièce de protection comprennent chacune une face interne en vis-à-vis dudit rouleau, ladite face interne étant distante dudit rouleau d'une distance d comprise entre 1 et 10 mm selon une direction radiale du rouleau.

Selon un perfectionnement, le convoyeur comprend une première et une deuxième pièce de protection, la première pièce de protection équipant un premier rouleau et la deuxième pièce de protection équipant un deuxième rouleau adjacent au premier rouleau, un premier organe d'accroche de la première pièce de protection et un deuxième organe d'accroche de la deuxième pièce de protection coopérant tous deux avec une seule et même zone d'accroche dudit profilé latéral.

En outre, la présente divulgation concerne un procédé de montage d'une pièce de protection telle que décrite précédemment, sur un convoyeur comprenant :
- une structure comportant deux profilés latéraux entre lesquels une pluralité de rouleaux s'étendent transversalement,
- l'un au moins des rouleaux est entraîné en rotation par un moteur, chaque rouleau comportant une surface de roulement et des flancs, chaque rouleau étant monté pivotant par rapport aux profilés latéraux via un arbre de montage, l'arbre de montage comportant des portions d'extrémités en saillie des deux flancs aux extrémités du rouleau,
- au moins une courroie d'entraînement reliant deux des rouleaux, la courroie comprenant un brin supérieur et un brin inférieur, et, en particulier, pour chaque rouleau, les espaces entre le brin supérieur et le brin inférieur de chaque courroie et le rouleau définissant des zones de pincement,
le procédé de montage comprenant :
- Fixation de ladite pièce de protection sur un profilé latéral par coopération entre le moyen de fixation et l'un des profilés latéraux,
- Passage d'une des portions d'extrémité de l'arbre de montage d'un desdits rouleaux à travers ladite ouverture de l'embase de la pièce de protection déjà fixée sur le profilé latéral.

### Brève description des dessins

D'autres caractéristiques, détails et avantages apparaîtront à la lecture de la description détaillée ci-après, et à l'analyse des dessins annexés, sur lesquels :
[Fig. 1] montre une représentation schématique en perspective d'un convoyeur à rouleaux selon un exemple.
[Fig. 2] montre une représentation schématique de deux rouleaux, reliés par une courroie, et de deux pièces de protection montées sur un profilé, selon un exemple.
[Fig. 3] montre une représentation schématique de trois rouleaux, vue selon une direction parallèle à l'axe d'élongation des rouleaux, mettant en évidence la localisation de zones de pincement, selon un exemple.
[Fig. 4] montre une représentation schématique en perspective d'une pièce de protection selon un exemple, la figure proposant deux vues A et B montrant respectivement la pièce vue de face et vue de derrière.
[Fig. 5] montre une représentation schématique en coupe, selon un plan horizontal passant par l'ouverture de l'embase, d'une pièce de protection selon un exemple.

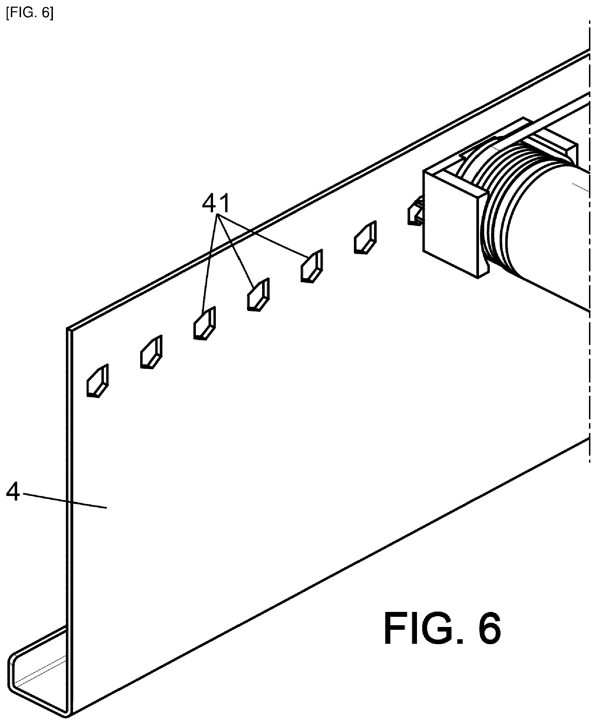

[Fig. 6] montre une représentation schématique en perspective d'un profilé sur lequel est aménagé une pluralité de zones d'accroche, et sur lequel est monté une pièce de protection et un rouleau, selon un exemple.
[Fig. 7] montre une représentation schématique en perspective d'un exemple de procédé de montage d'une pièce de protection selon un exemple sur un profilé.
[Fig. 8] montre une représentation schématique en vue de face, dans une direction parallèle à l'axe d'un rouleau, d'une pièce de protection selon un exemple lorsqu'elle est montée sur un profilé.
[Fig. 9] montre une représentation schématique en perspective d'un exemple de procédé de montage d'un rouleau sur un profilé, alors qu'une pièce de protection est déjà en position sur le profilé.
[Fig. 10] montre une représentation schématique en perspective d'un ensemble de deux rouleaux, reliés par une courroie, et de deux pièces de protection montées sur un profilé, selon un exemple, sur laquelle l'arrière du profilé est particulièrement visible.
[Fig. 11] montre une représentation schématique d'un exemple de montage de deux pièces de protection adjacentes, partageant une même zone d'accroche. La figure propose deux vues A et B, montrant respectivement une vue de l'arrière d'un profilé sur laquelle deux pièces de protection sont montées selon cet exemple, et une vue en coupe selon un plan horizontal coupant les deux moyens de fixation adjacents des deux pièces de protection.
[Fig. 12] montre une représentation schématique en coupe selon un plan transversal à la direction d'élongation des rouleaux positionnés au niveau de portions d'entrainement des rouleaux, sur laquelle sont au moins partiellement visibles trois rouleaux et trois pièces de protection selon un exemple, la distance radiale entre les parois de protection et le rouleau étant particulièrement visible.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un convoyeur d'entrepôt dans sa position normale d'utilisation.

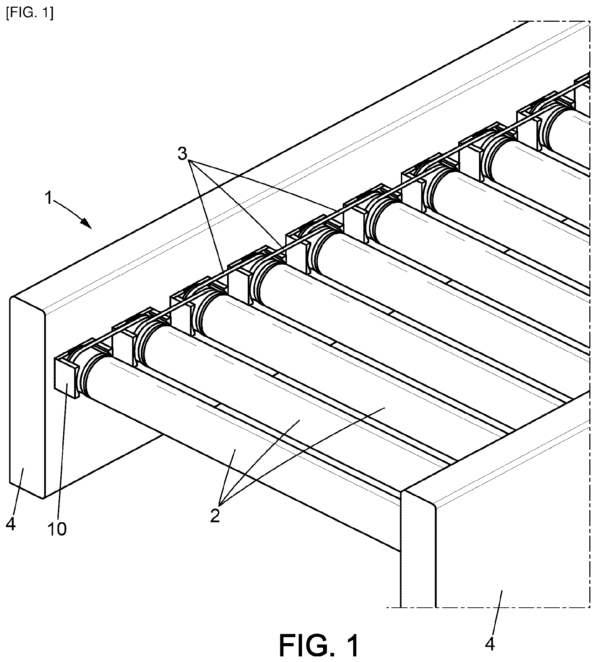

Il est maintenant fait référence à la figure 1, qui montre un convoyeur 1 selon un exemple. Le convoyeur comprend typiquement une structure comportant deux profilés latéraux 4 entre lesquels une pluralité de rouleaux 2 s'étendent transversalement. La structure peut en outre comporter des moyens, tels que des pieds, pour permettre au convoyeur de reposer sur le sol (non représentés).

Selon des exemples, l'un au moins des rouleaux 2 est entraîné en rotation par un moteur (non représenté), et les rouleaux 2 sont reliés deux à deux par une pluralité de courroies 3. De cette façon, un seul moteur est suffisant pour que chacun des rouleaux soit entraîné en rotation et permette l'acheminement de marchandise le long du convoyeur.

Il est possible que la valeur d'entraxe entre les rouleaux 2 soit constante sur toute une portion du convoyeur, telle que c'est le cas sur l'exemple représenté en figure 1. Il est également possible que l'entraxe varie sur une portion du convoyeur, ou d'un convoyeur à l'autre.

Selon des exemples, chaque rouleau 2 est relié à ses deux rouleaux 2 directement adjacents par deux courroies. De cette façon, chaque rouleau 2 reçoit deux courroies 3 s'étendant chacune vers une direction opposée à l'autre.

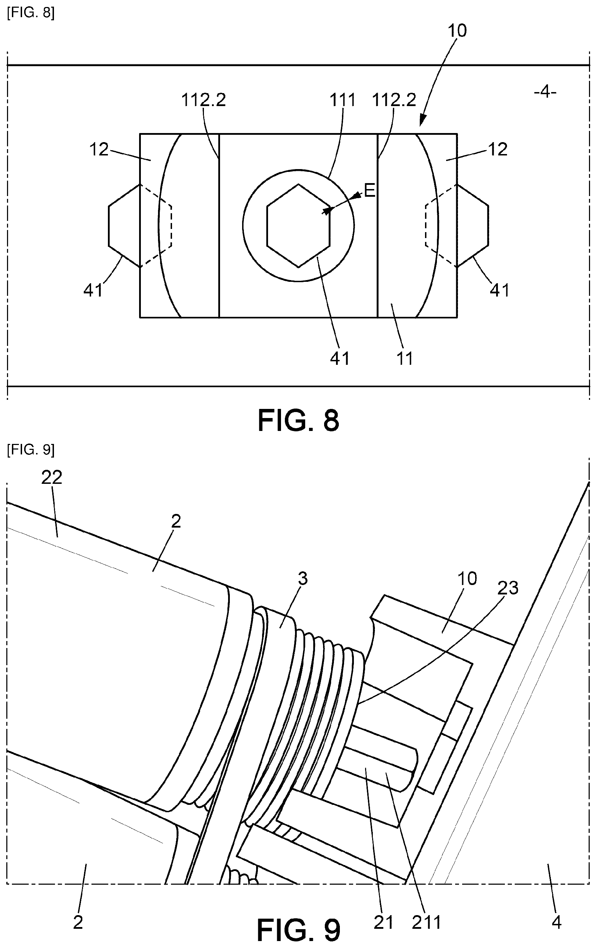

Chaque rouleau 2 comporte une surface de roulement 22 et des flancs 23 latéraux (voir figure 9). La surface de roulement 22 peut typiquement être cylindrique de révolution. Les flancs 23 latéraux peuvent être des surfaces planes, typiquement circulaires, qui ferment les extrémités de la surface de roulement 22. Dans des exemples, les flancs 23 s'étendent dans des plans normaux à une direction d'élongation du rouleau 2. Cette direction d'élongation peut s'étendre typiquement selon l'axe de révolution de la surface de roulement cylindrique.

Dans des exemples, les flancs 23 de chaque rouleau 2 s'étendent sensiblement parallèlement aux profilés latéraux 4, et en vis-à-vis de ceux-ci. Ainsi, chaque flanc 23 peut être distant du profilé latéral 4 correspondant, par exemple d'une distance comprise entre 5 et 10 mm.

Chaque rouleau 2 peut être monté pivotant par rapport aux profilés latéraux 4 via un arbre de montage 21. L'arbre de montage 21 peut comprendre des portions d'extrémités 211 qui s'étendent en saillie des deux flancs 23 aux extrémités du rouleau 2. Les portions d'extrémités 211 peuvent s'étendre selon la direction d'élongation du rouleau 2, et/ou peuvent s'étendre de façon normale aux flancs 23. Les portions d'extrémités 211 peuvent comprendre une section transversale de forme circulaire, ou polygonale, par exemple de forme hexagonale.

Selon des exemples, chaque rouleau 2 peut comprendre un corps tournant portant la surface de roulement 22 et étant apte à pivoter autour d'un arbre de montage 21. L'arbre de montage 21 est alors monté de façon à être bloqué en rotation, à chacune de ses deux portions d'extrémités 211, sur les deux profilés latéraux 4.

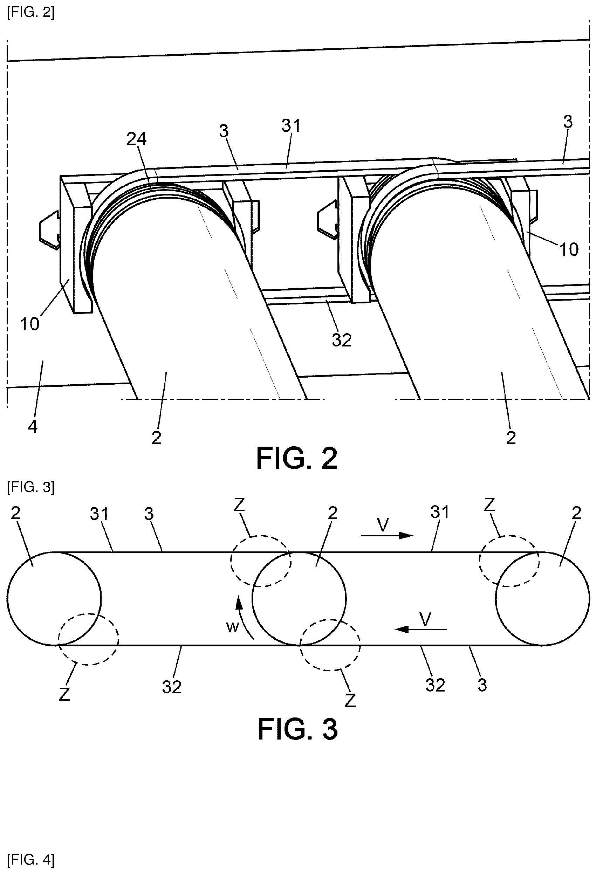

Chaque courroie de la pluralité de courroies d'entraînement 3 reliant les rouleaux 2 deux à deux comprend un brin supérieur 31 et un brin inférieur 32. Comme représentés en figures 2 et 3, le brin supérieur 31 s'étend au-dessus des rouleaux 2 et le brin inférieur 32 s'étend en-dessous des rouleaux 2. De cette façon, pour une même courroie 3, le brin supérieur 31 est entraîné en translation selon une direction opposée à celle du brin inférieur 32 de la même courroie 3. En particulier, pour chaque rouleau 2, les espaces entre le brin supérieur 31 et le brin inférieur 32 de chaque courroie 3 et le rouleau 2, ou plus précisément la surface de roulement 22 du rouleau 2, définissent des zones de pincement Z (représentées en figure 3).

Cependant, si l'on considère les directions selon lesquels les brins supérieur 31 et inférieur 32 translatent, on peut distinguer pour chaque rouleau 2, une zone en laquelle un brin vient en direction du rouleau, et une autre zone en laquelle l'autre brin de la même courroie quitte le rouleau 2. Ce sont les zones en lesquelles le brin vient en direction du rouleau 2 qui présentent un risque de pincement, le brin pouvant alors entraîner un doigt d'un opérateur vers le rouleau 2 et le pincer. Ces différentes zones de pincement Z sont représentées en figure 3, en fonction des directions de translation V et d'une direction de rotation de rouleau w.

Chaque rouleau 2 peut comprendre une portion d'entraînement 24 en laquelle les courroies 3 viennent au contact du rouleau 2. Typiquement, la portion d'entraînement 24 peut être une partie d'extrémité de la surface de roulement 22 adjacente à un flanc 23 du rouleau. Dans des exemples, cette portion d'entrainement 24 peut comporter une largeur supérieure à deux fois la largeur d'une courroie 3. De cette façon, une même portion d'entraînement 24 peut recevoir deux courroies 3 côte à côte, l'une reliant ledit rouleau 2 avec un rouleau adjacent d'un côté avant, et l'autre reliant ledit rouleau 2 avec un autre rouleau du côté arrière, tel que représenté en figures 2 et 3.

Dans des exemples, la portion d'entraînement 24 peut être configurée pour améliorer les frottements avec la courroie 3 et donc l'efficacité de la transmission de couple, par exemple en comportant des indentations ou des stries aptes à coopérer avec des formes complémentaires de la courroie, ou comportant une rugosité de surface importante par rapport à la surface de roulement 22 du rouleau 2.

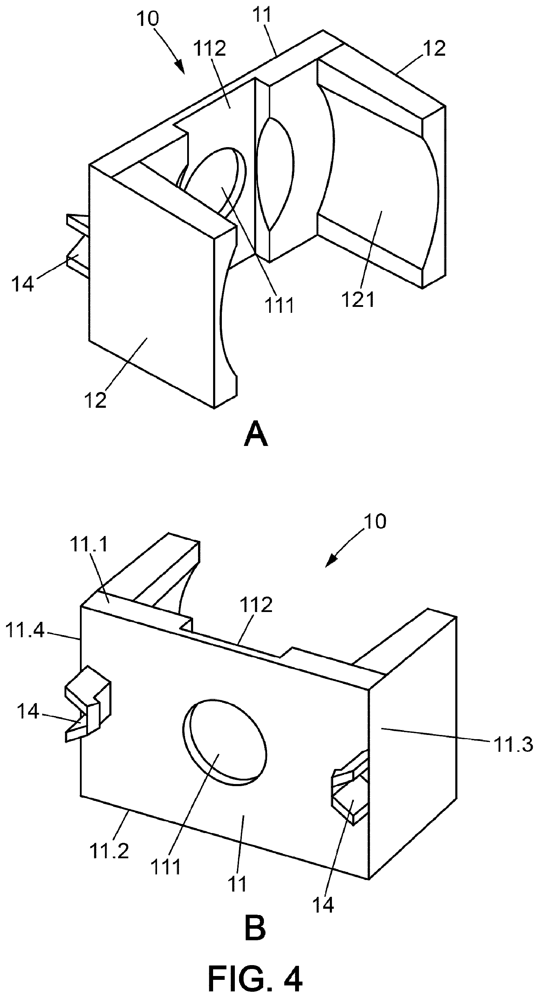

La figure 4 représente en deux vues A et B distinctes une pièce de protection 10 selon un exemple de la présente divulgation.

La pièce de protection 10 comporte une embase 11, qui s'étend de façon sensiblement plane. Ladite embase 11 comprend une ouverture 111 configurée pour être traversée par une portion d'extrémité 211 de l'arbre de montage 21 d'un rouleau 2. De cette façon, une fois montée sur un convoyeur, l'embase 11 est intercalée dans l'espace laissé libre entre un flanc 23 du rouleau 2 et le profilé latéral 4 correspondant. Selon des exemples, l'embase 11 peut comporter une épaisseur « hors-tout » comprise entre 1 et 8 mm.

Selon des exemples, lorsque le rouleau 2 et la pièce de protection 10 sont montés sur le profilé 4, le contour de l'ouverture 111 de l'embase est en tout point distant de la portion d'extrémité 211 de l'arbre de montage 21. Autrement dit, l'ouverture 111 de l'embase n'est pas configurée pour être en contact avec le rouleau 2 une fois que la pièce de protection 10 et le rouleau 2 sont montés sur le profilé 4. Par exemple, l'ouverture 111 peut comporter un contour de forme circulaire, d'un diamètre supérieur à la plus grande dimension d'une section transversale de l'arbre 21.

Dans des exemples, l'embase 11 peut comprendre un côté supérieur 11.1 et un côté inférieur 11.2, ainsi qu'un côté avant 11.3 et un côté arrière 11.4.

En outre, la pièce de protection 10 comprend également deux parois de protection 12 qui s'étendent en saillie depuis l'embase 11. La direction d'élongation des parois de protection 12 peut être parallèle à une direction d'élongation du rouleau 2. La direction d'élongation des parois de protection 12 peut être perpendiculaire à un plan formé par l'embase 11. Une fois la pièce de protection 10 montée sur un convoyeur, ces parois de protection 12 sont configurées pour s'étendre de part et d'autre du rouleau 2 correspondant.

Autrement dit, les parois de protection 12 délimitent l'avant et l'arrière d'un espace configuré pour accueillir le rouleau 2.

Dans des exemples, l'embase 11 s'étend de façon que ses côtés avant et arrière dépassent la surface de roulement du rouleau 2. Typiquement, la longueur de l'embase mesurée depuis son côté avant 11.3 jusqu'à son coté arrière 11.4 peut être plus grande qu'un diamètre du rouleau 2. De cette façon, les deux parois de protection 12 peuvent s'étendre depuis les côtés avant 11.3 et arrière 11.4 de l'embase 11, de part et d'autre du rouleau 2.

Dans des exemples, la portion d'entraînement 24 du rouleau 2 s'étend sur une certaine longueur du rouleau, par exemple une longueur suffisante pour accueillir deux courroies 3 l'une à côté de l'autre. Il est alors possible que les parois de protection 12 s'étendent sur une longueur suffisante pour recouvrir la portion d'entraînement 24 du rouleau 2. D'une autre manière, selon des exemples, les parois de protection 12 peuvent s'étendre selon la direction d'élongation du rouleau 2 sur une longueur au moins supérieure à deux fois la largeur d'un brin de courroie 3.

Il est en outre possible que chaque rouleau 2 comporte une portion d'entraînement 24 à chacune de ses deux extrémités.

Les parois de protection 12 sont configurées pour réaliser une barrière physique pour empêcher d'accéder aux zones de pincement Z entre les courroies et les rouleaux. De cette façon, chaque paroi de protection 12 s'étend entre le brin supérieur 31 et le brin inférieur 32 de chacune des courroies 3 en prise avec le rouleau 2 au niveau duquel la pièce de protection 10 est montée. Une telle configuration est particulièrement visible selon des exemples en figure 2, 10 et 12.

Dans un exemple non représenté, les portions supérieure et inférieure des parois de protection 12 s'étendent selon la direction d'élongation du rouleau 2 sur une longueur supérieure à celle des portions médianes des parois de protection. De cette façon, les parois de protection ne gênent pas la rotation du rouleau et empêchent l'accès aux zones de pincement Z.

Dans des exemples, l'embase 11 présente une hauteur mesurée depuis son côté supérieur 11.1 jusqu'à son côté inférieur 11.2 qui peut être inférieure au diamètre de la surface de roulement 22 du rouleau 2. De cette façon, les parois de protection 12 qui peuvent s'étendre sur toute la hauteur des côtés avant et arrière de l'embase 11, présentent alors aussi une hauteur inférieure à la distance entre les brins supérieur 31 et inférieur 32 de la courroie 3 correspondante.

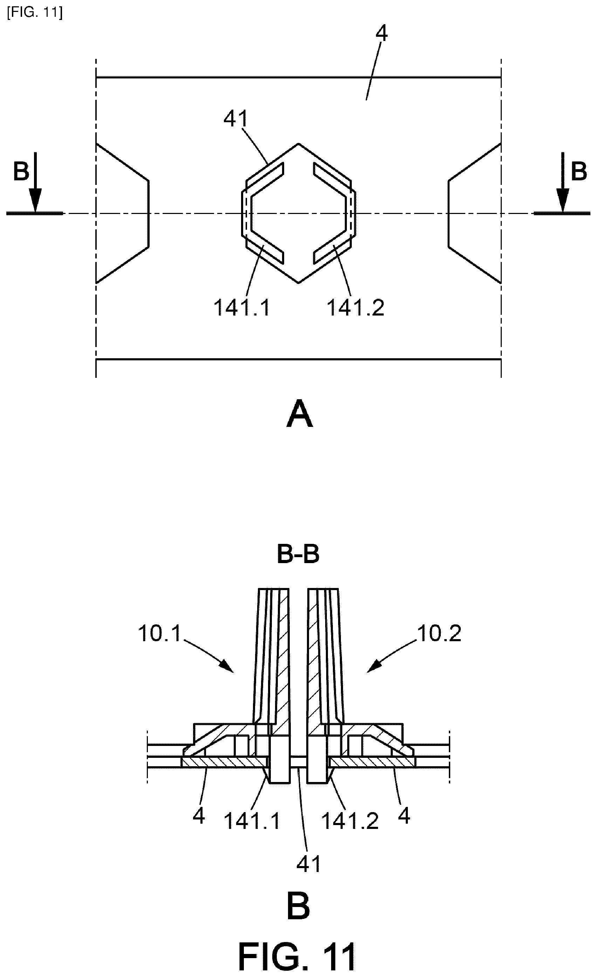

Selon des exemples, les parois de protection 12 peuvent comprendre une face interne 121 en vis-à-vis du rouleau 2. Cette face interne 121 peut être concave, de façon à « épouser » la forme extérieure cylindrique du rouleau 2 (voir aussi la figure 11). Autrement dit, la forme de la surface interne 121 des parois de protection 12 est en correspondance géométrique avec la forme extérieure du rouleau 2. Cette forme est avantageuse en ce qu'elle permet de suivre au plus proche la surface de roulement du rouleau, pour davantage de sécurité. Cependant, il est possible de prévoir d'autres formes alternatives de paroi de protection 12, par exemple comprenant une paroi plane verticale et deux parois obliques, ou perpendiculaires à la paroi plane se rapprochant du rouleau 2.

En outre, la pièce de protection 10 comprend également un moyen de fixation 14 configuré pour la maintenir sur le profilé latéral 4 correspondant du convoyeur 1. Ce moyen de fixation 14 empêche en outre la rotation de la pièce de protection 12 par rapport au profilé latéral 4. Ainsi, il n'est pas nécessaire d'ajuster la forme de l'ouverture 111 de l'embase 11 à la forme de la portion d'extrémité 211 de l'arbre de montage 21.

Selon des exemples, le moyen de fixation 14 est apte à coopérer avec une zone d'accroche 41, comportant par exemple un contour fermé, la zone d'accroche étant ménagée sur le profilé latéral 4. La zone d'accroche 41 peut être obtenue par poinçonnage du profilé, ou par tout moyen de découpage adapté pour obtenir une ouverture à travers le profilé. Selon des exemples, le moyen de fixation 14 comporte deux organes d'accroche 141, 142, chacun apte à coopérer avec une zone d'accroche 41 du profilé latéral 4 correspondant. Les organes d'accroche 141, 142 peuvent par exemple être saillants de l'embase 11 d'un côté de l'embase opposé aux deux parois de protection 12.

Selon des exemples, les organes d'accroche 141, 142 s'étendent en saillie de l'embase 11 sur une longueur dimensionnée pour qu'un retrait desdits organes d'accroche 141, 142 hors de leur zone d'accroche 41 respective nécessite un mouvement de translation, le long de l'arbre du rouleau, d'une course supérieure au jeu maximal entre un flanc 23 du rouleau 2 et le profilé 4 augmentée de l'épaisseur de l'embase 11. De cette façon, si l'on tente de démonter la pièce de protection 10 alors que le rouleau 2 est en place sur le profilé et à travers l'ouverture 111, par exemple de contour ouvert, on ne dispose pas d'un espace suffisant entre le flanc 23 du rouleau et le profilé pour extirper la pièce de protection 10, et plus précisément ses organes d'accroche 141, 142, hors des zones d'accroche 41 du profilé. En effet, l'embase de la pièce de protection viendra buter sur le flanc 23 du rouleau avant que les organes d'accroche 41 soient complétement retirés des zones d'accroche 41, et il sera alors impossible de démonter la pièce de protection 10 sans retirer au préalable le rouleau, pour encore davantage de sécurité.

Selon des exemples, les organes d'accroche 141, 142 peuvent être aptes à se déformer, au moins en partie, élastiquement, de façon à coopérer avec les zones d'accroche 41. Une telle déformation peut, selon des exemples, être induite par un mouvement de translation selon la direction d'élongation des rouleaux 2, c'est-à-dire perpendiculairement au plan du profilé 4. Selon des exemples, la déformation est provoquée par une surface conçue de biais sur l'organe d'accroche, permettant de transformer une translation en une déformation transversale de l'organe d'accroche, par exemple à la manière d'un « clip ».

Dans des exemples, les zones d'accroche 41 ménagées sur le profilé latéral 4 sont de forme polygonale, en particulier hexagonales. De façon avantageuse, il est possible que l'arbre de montage 21 du rouleau 2 soit monté sur le profilé 4 via l'une de ces zones d'accroche 41. Ainsi, il est possible avec un même outil de réaliser une pluralité de zones d'accroche 41 sur le profilé 4 chacune pouvant indépendamment servir au montage du rouleau 2 ou au montage de la pièce de protection 10.

La forme des zones d'accroche 41 peut avantageusement être la même que la forme d'une section transversale de la portion d'extrémité 211 de l'arbre autour duquel le rouleau 2 est monté pivotant, de façon à bloquer la rotation de l'arbre de montage 21 par rapport au profilé 4. Selon un exemple, les zones d'accroche 41 et les portions d'extrémité 211 sont de même forme, par exemple de forme hexagonale.

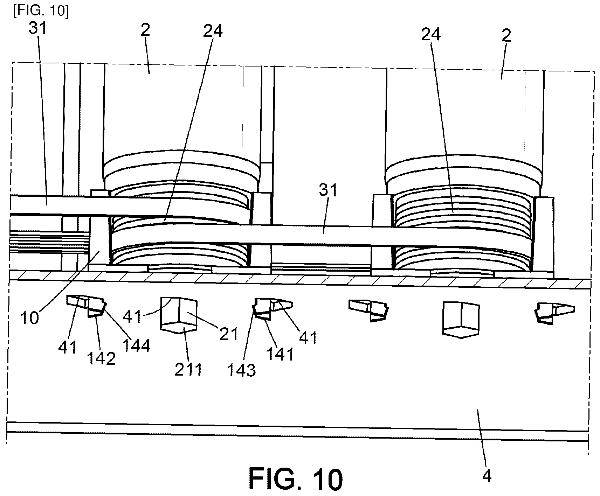

Selon des exemples, les organes d'accroche 141, 142 peuvent être situés chacun de part et d'autre de l'ouverture 111 ménagée dans l'embase 11, au niveau chacun des côtés avant 11.3 et arrière 11.4 de l'embase 11. Ainsi, comme montré sur la figure 10, trois zones d'accroche 41 consécutives sur le profilé 4 servent, dans l'ordre, au montage d'un premier organe d'accroche 141, puis au montage de l'arbre 21 du rouleau 2, puis enfin au montage d'un deuxième organe d'accroche 142 de la pièce de protection.

Avantageusement, les organes d'accroche 141,142 sont situés sensiblement à égale distance du côté supérieur 11.1 et du côté inférieur 11.2 de l'embase 11, de façon que la pièce de protection 10 n'impose pas un sens de montage sur le profilé 4.

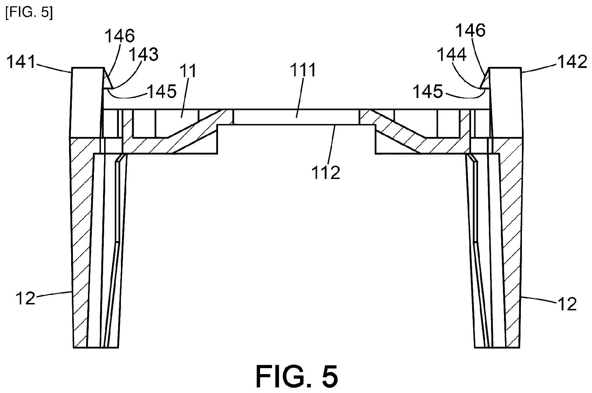

Selon des exemples, et notamment comme celui représenté en figure 5, chaque organe d'accroche 141, 142 peut comprendre une dent 143, 144 orientée l'une vers l'autre. Autrement dit, la dent 143, 144 de chacun des organes d'accroche 141, 142 est orientée vers l'intérieur, ou vers l'ouverture 111. Chaque dent 143, 144 peut être configurée pour coopérer avec un contour de la zone d'accroche 41 correspondante. En effet, chaque dent peut présenter une surface de contre-appui 145, en vis-à-vis de l'embase 11, l'espace formé entre cette surface de contre-appui 145 et l'embase 11 étant configuré pour loger l'épaisseur du profilé latéral 4 sur lequel est montée la pièce de protection 10. Selon un exemple, la dent 143, 144 peut présenter une surface en biais 146, apte à transformer une translation de l'organe d'accroche 141, 142 à travers la zone d'accroche 41 en une déformation élastique transversale dudit organe, par contact entre la surface en biais 146 et le profilé 4, à la manière d'un « clip ».

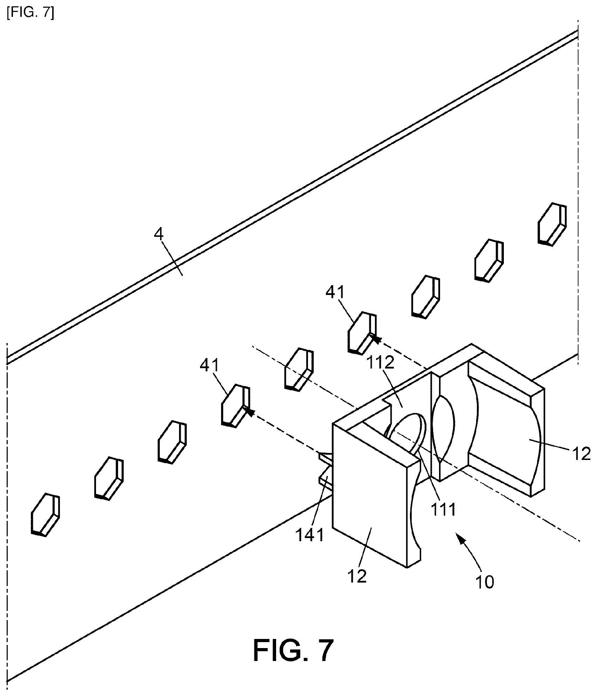

Un exemple de procédé de montage de la pièce de protection 10 et du rouleau 2 est représentée en figures 7 et 8.

Selon des exemples, le contour des zones d'accroche 41 est fermé, ce qui implique que la coopération entre le moyen d'accroche 14 et le profilé 4 pour le maintien en position de la pièce de protection 10 se produit en approchant la pièce 10 au moins partiellement selon une direction parallèle à la direction d'élongation des rouleaux 2, c'est-à-dire perpendiculairement au plan formé par les profilés 4.

Dans l'exemple représenté en figure 7, la pièce est approchée selon une direction perpendiculaire au plan du profilé 4, de façon que les organes d'accroche 141, 142 pénètrent au travers des zones d'accroche 41. Les dents 143, 144, une fois passées d'un côté arrière au profilé 4, agissant via leur surface de contre-appui 145 pour maintenir la pièce de protection contre le profilé 4. Une fois montée, l'embase 11 est alors plaquée contre le profilé 4.

Ensuite, le rouleau 2 peut être monté. S'il s'agit d'un deuxième rouleau 2 adjacent à un premier rouleau déjà monté, le deuxième rouleau est approché de l'ouverture 111 avec la courroie 3 le reliant au premier rouleau, et le cas échéant avec une autre courroie 3 (non représentée) qui peut être prévue pour relier le prochain rouleau. Le brin supérieur 31 de la courroie 3 est alors placé au-dessus d'un côté supérieur de la paroi de protection 12 du côté du premier rouleau, et le brin inférieur 32 en-dessous d'un côté inférieur de la même paroi de protection 12. Le rouleau 2 est ensuite approché de sorte qu'une portion d'extrémité 211 de l'arbre de montage 21 du rouleau soit positionnée en face de l'ouverture 111 de l'embase 11 de la pièce de protection 10 déjà montée. La zone d'accroche 41 qui est prévue pour réceptionner l'arbre de montage 21 du rouleau est alors accessible en traversant l'ouverture 111. La zone d'accroche 41 du profilé et l'ouverture 111 de la pièce de protection 10, une fois montée, peuvent avantageusement être sensiblement concentriques. Alternativement, l'entièreté de la zone d'accroche 41 est incluse dans le contour de l'ouverture 111. L'arbre de montage 21 est alors inséré au travers de l'ouverture 111 puis au travers de la zone d'accroche 41. La zone d'accroche 41 peut alors être configurée, notamment par complémentarité de forme, pour stopper en rotation l'arbre de montage 21. L'embase 11 de la pièce de protection 10 est alors intercalée entre le profilé 4 et le flanc 23 du rouleau 2 qui la traverse.

La pièce de protection 10 montée sur le profilé 4 est représentée selon un exemple en figure 8. Une fois montée, la zone d'accroche 41 prévue pour le montage de l'arbre 21 est accessible par l'ouverture 111.

L'ouverture 111, selon la présente divulgation, n'est pas conçue pour être en contact avec l'arbre 21 alors que le rouleau est monté, et ne participe pas à la fixation de la pièce de protection 10, celle-ci étant maintenue sur le profilé 4 uniquement par le moyen de fixation 14. Il peut donc être prévu un jeu de fonctionnement E, qui peut être compris entre 0,5 et 6 mm, entre le contour de l'ouverture 111 et l'arbre de montage 21. Un tel jeu peut également être utile pour absorber d'éventuelles tolérances de réalisation des zones d'accroche 41, qui pourrait résulter en un décentrage de la zone d'accroche 41 par rapport à l'ouverture 111.

L'ouverture 111 permet de maintenir accessible la zone d'accroche 41 alors que l'embase 11 est plaquée contre le profilé 4. L'ouverture 111 permet en outre d'empêcher le démontage de la pièce de protection 10 si l'on n'a pas, au préalable, au moins partiellement démonté le rouleau 2, en particulier en retirant la portion d'extrémité 211 de l'arbre 21 hors du profilé latéral 4, du côté de la pièce de protection à démonter, pour autoriser ensuite le retrait de la portion d'extrémité 211, de ladite ouverture 111 de l'embase de la pièce de protection.

À cet effet, ladite ouverture 111 peut être de contour fermé. La pièce de protection étant alors, par son ouverture 111, enfilée sur la portion d'extrémité 211 du rouleau 2, le contour de l'ouverture bloquant physiquement le retrait de la pièce de protection 10 hors de l'arbre selon une direction perpendiculaire à l'arbre. Le contour fermé nécessite en effet que la pièce soit dégagée, par un mouvement le long de l'arbre, jusqu'à une extrémité libre de la portion d'extrémité. Le rouleau, en position montée, traverse le profilé et cette extrémité libre est alors inaccessible, située d'un côté arrière du profilé.

Si le contour n'est pas fermé, à savoir que ce contour comprend une portion débouchant sur un côté de l'embase, cette portion est agencée en une position sur l'embase et/ou est dimensionnée de telle sorte qu'elle n'autorise pas l'extraction de la pièce de protection en faisant échapper l'arbre par cette portion ouverte de contour, par exemple en présentant une portion de largeur réduite, inférieure à une dimension transversale de l'arbre.

Le profilé 4 peut, selon des exemples, comporter des zones d'accroche 41 qui sont espacées régulièrement, c'est-à-dire selon une configuration qui se répète par exemple toutes les trois zones d'accroche 41, de façon qu'une fois montée par son moyen de fixation 14, la pièce de protection 10 présente son ouverture 111 de façon alignée, en face d'une zone d'accroche 41. Selon d'autres exemples, les zones d'accroche 41 adjacentes peuvent être espacées deux-à-deux d'une distance constante. Une telle valeur de distance peut par exemple être sensiblement égale à la moitié de la longueur de l'embase 11, mesurée depuis son côté avant 11.3 jusqu'à son côté arrière 11.4.

Selon des exemples, et notamment tel que représenté dans les exemples des figures 4, 5 et 8, la pièce de protection peut comporter un évidement, par exemple une rainure 112 sur l'embase 11 pour faciliter le montage du rouleau 2. En effet, il est possible que le montage des rouleaux 2 s'effectuent lorsque les profilés 4 sont déjà en place. Ainsi, la distance qui sépare les profilés 4 est imposée, et la surépaisseur ajoutée par les deux pièces de protection 10 peut rendre difficile le montage du rouleau 2 entre les deux profilés. A cette fin, la rainure 112 peut être en sur-profondeur d'une paroi de l'embase faisant face au flanc 23 du rouleau 2, notamment du côté de l'embase 11 opposé à celui qui est monté contre le profilé 4. La rainure 112 peut être conçue de sorte qu'elle s'étende suivant une direction de montage de l'arbre 21 du rouleau 2, par exemple une direction médiane aux deux parois de protection 12 traversant l'ouverture 111, ce qui correspond à une direction d'approche de l'arbre de montage 21 vers l'ouverture 111. La rainure 112 peut s'étendre sur au moins une portion de la hauteur de l'embase 11. Par exemple, la rainure 112 peut s'étendre d'un côté supérieur à un côté inférieur de l'embase 11 en passant par l'ouverture 111.

La rainure 112 est ainsi configurée pour éviter toute interférence entre l'arbre 21 et la pièce de protection 10 lors de l'approche de la portion d'extrémité 211 de l'arbre de montage 21 jusqu'à ladite ouverture 111 préalablement à son insertion au travers de l'ouverture 111 et de la zone d'accroche 41. Selon des exemples, la rainure 112 peut s'étendre depuis l'un des côtés supérieur et inférieur de l'embase 11 au moins jusqu'à l'ouverture 111, et peut également s'étendre au-delà de ladite ouverture 111, par exemple jusqu'à l'autre du côté supérieur et inférieur, de façon que la pièce de protection 10 n'impose pas un sens de montage sur le profilé ou un sens de montage du rouleau 2. Selon des exemples, la rainure 112 peut présenter une largeur, d'un bord avant 112.1 à un bord arrière 112.2, supérieure ou égale à la largeur de l'ouverture 111, typiquement supérieure au diamètre de l'ouverture 111 lorsque celle-ci est circulaire (voir figure 8).

Ainsi montée, la pièce de protection 10 ne peut être démontée par inadvertance puisqu'elle est traversée par un rouleau 2, et montée sur le profilé 4 par un moyen d'accroche 14 dont la cinématique de démontage, parallèle à l'axe du rouleau, est bloquée par un flanc 23 de ce même rouleau 2. Il est alors nécessaire de démonter le rouleau 2, au moins partiellement, pour pouvoir démonter la pièce de protection 10.

Dans des exemples, il peut être prévu que la pièce de protection soit monobloc. C'est-à-dire que l'embase 11, les parois de protection 12, et éventuellement le moyen d'accroche 14 font parties d'un même corps monobloc. Autrement dit, la pièce de protection est réalisée en une seule pièce. De manière alternative, la pièce de protection peut être prévue en deux parties ou plus, rapportées les unes aux autres.

Selon des exemples, la pièce de protection 10 peut être moulée par injection plastique. Il est également possible de l'obtenir par tout autre moyen connu de l'homme de l'art, par exemple en métal, par exemple moulé et/ou usiné.

Dans des exemples, la pièce de protection 10 est d'une forme présentant au moins une symétrie. En particulier, elle peut comprendre deux plans de symétrie orthogonaux : le plan médian aux deux parois de protection 12 qui traverse un centre de l'ouverture 111, ainsi que le plan orthogonal à ce plan médian au niveau du centre de l'ouverture 111. De cette façon, la pièce de protection 10 présente une géométrie qui reste invariante indépendamment de son sens de montage sur le profilé 4, limitant ainsi les risques d'erreur lors de son installation sur le convoyeur.

Dans des exemples, il peut être prévu que l'ouverture 111 présente un contour fermé, de sorte que le seul moyen pour la pièce de protection 10 d'être retirée d'un arbre de montage 21 d'un rouleau 2 soit de s'en extraire par un mouvement selon une direction parallèle à l'axe de l'arbre 21. En complément, selon des exemples, l'embase 11 peut être monobloc. De cette façon, le montage de la pièce de protection 10 est encore davantage sécurisé, l'arbre de montage 21 devant être complètement retiré de sa zone d'accroche 41 au préalable du démontage de la pièce de protection 10.

Selon des exemples, chaque organe d'accroche 141, 142 s'étend dans la continuité d'une paroi de protection 12 de l'autre côté de l'embase 11 de façon qu'un rapprochement des deux parois de protection 12 engendre un écartement des deux dents 143, 144 l'une par rapport à l'autre. Un tel effet peut être obtenu par exemple par une réduction d'épaisseur au niveau de la base des parois de protection 12 de façon à permettre une souplesse suffisante de la pièce. Les bases des parois de protection 12 agissant alors comme des points de bascule permettant qu'un pincement des parois de protection 12 éloigne les dents 143, 144 l'une par rapport à l'autre. Un tel écartement permet d'insérer les organes d'accroche141, 142 plus facilement au travers des zones d'accroche 41, un relâchement des parois 12 permettant alors que les dents 143, 144 des organes d'accroche viennent prendre en tenaille le profilé 4 pour maintenir la pièce de protection 10 en position. Cette solution peut être prévue comme complémentaire ou alternative à la présence de surface en biais 146 sur les organes d'accroche.

Il est maintenant fait référence à la figure 10 qui représente un exemple d'ensemble de deux rouleaux 2 et de deux pièces de protection 10 montés sur un profilé 4. Selon cet exemple, l'ensemble occupe six zones d'accroche 41. Il est également possible d'espacer davantage les deux rouleaux, en laissant par exemple une zone d'accroche inoccupée entre les deux rouleaux 2, ou plusieurs zones d'accroche inoccupées. Il est également possible de prévoir deux groupes espacés comprenant chacun trois zones d'accroche. De façon particulièrement visible sur cet exemple, le brin supérieur 31 de la courroie 3 reliant les deux rouleaux 2 passe par-dessus les parois de protection avant et arrière des deux pièces de protection 10.

Selon des exemples, les deux organes d'accroche 141, 142 peuvent présenter chacun une forme qui est obtenue par symétrie de l'autre, de façon que deux organes d'accroche 141, 142 de deux pièces de protection 10 adjacentes puissent occuper la même zone d'accroche 41 sans commettre d'interférence l'un avec l'autre. Une telle solution peut être avantageuse en ce qu'elle peut minimiser le nombre de zones d'accroche 41 du profilé 4, ou encore en ce qu'elle permet de rapprocher les rouleaux entre eux. Une telle configuration est représentée selon un exemple en figure 11. Selon cet exemple, les organes d'accroche 141.1, 141.2 de deux pièces de protection adjacentes 10.1, 10.2 présentent chacun la forme d'un demi-hexagone, qui, une fois juxtaposés, sont aptes à coopérer avec une même zone d'accroche 41 sans se gêner l'un l'autre, chacun en prise avec une portion respectivement avant et arrière du contour de la zone d'accroche 41. De cette façon, cinq zones d'accroche sont suffisantes pour fixer deux rouleaux 2, et deux pièces de protection 10.1, 10.2 adjacentes. Les rouleaux 2 s'en retrouvent particulièrement proche l'un de l'autre.

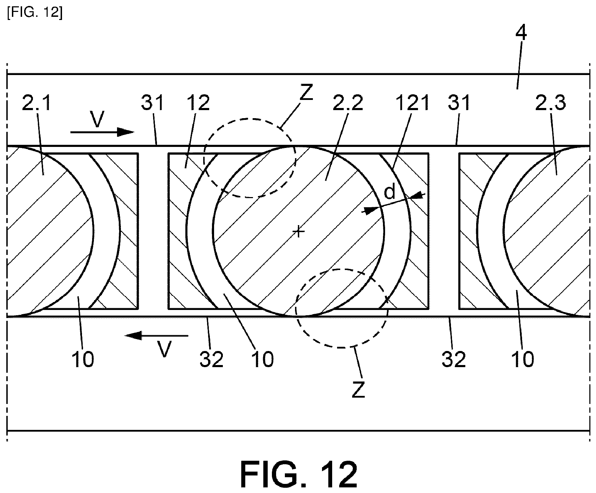

Il est maintenant fait référence à la figure 12, qui représente une vue en coupe transversale aux rouleaux d'un exemple de trois rouleaux 2.1, 2.2, 2.3 adjacents. Les parois de protection 12 des pièces de protection 10 présentent sur cet exemple une face interne 121 concave, qui suit la courbure de la forme cylindrique des rouleaux 2. Les faces internes 121 des parois de protection 12 sont, selon cet exemple, distantes de la surface extérieure des rouleaux 2 d'une distance d, mesurée radialement à l'axe de révolution du rouleau 2. Selon des exemples, la distance d peut être comprise entre 1 et 10 mm. De cette façon, la face interne ne gêne pas le mouvement du rouleau 2, ou de la courroie intercalée entre le rouleau et la paroi de protection 10, mais empêche tout de même l'accès, par exemple avec un doigt, aux zones de pincement Z. De façon préférentielle, la distance d peut être comprise entre 3 et 5 mm. De manière générale, la distance d peut être inférieure à la dimension d'un doigt.

Selon des exemples, et tel que représenté en figure 12, les parois de protection 12 s'étendent entre les brins supérieurs 31 et les brins inférieurs 32 des courroies 3, sur toute la hauteur qui sépare les deux brins. Alternativement, il peut être prévu que les parois de protection 12 ne s'étendent qu'en partie haute, au voisinage du brin supérieur 31 du côté avant du rouleau 2, et en partie basse, au voisinage du brin inférieur 32 du côté arrière du rouleau 2, de façon à ne couvrir que les zones en lesquels le brin vient vers le rouleau 2 et présente un risque de pincement, laissant alors les zones en lesquels le brin fuit le rouleau exposées, puisque le mouvement du brin, en s'éloignant du rouleau, peut prévenir naturellement tout pincement en ces zones.

Ainsi, la pièce de protection, ou le convoyeur équipé de ladite pièce de protection, selon la présente divulgation, présentent tout ou partie des avantages suivants :
- La pièce de protection présente une géométrie qui lui permet, une fois montée sur le convoyeur, d'être difficilement démontable sans démonter au préalable le rouleau. Notamment, elle est intercalée entre un flanc du rouleau et le profilé, ses parois de protection s'étendent de part et d'autre du rouleau, elle présente une ouverture traversée par l'arbre du rouleau et un moyen de fixation sur le profilé. Ces caractéristiques, ensemble, rendent difficile le démontage de cette pièce qui réalise ainsi de façon plus fiable que les solutions existantes sa fonction sécuritaire de protection des zones de pincement.
- Un perfectionnement selon lequel la pièce de protection est monobloc ajoute encore davantage de difficulté au démontage de la pièce si le rouleau est en place. En effet, cette caractéristique optionnelle empêche de faciliter le démontage de la pièce en lui retirant une ou plusieurs parties démontables, par exemple ses parois de protection, et cela pour davantage de sécurité.

- Encore un perfectionnement selon lequel l'ouverture présente un contour fermé permet de verrouiller, physiquement, la pièce qui est alors enfilée sur l'arbre. D'ordinaire, même si elle peut présenter un contour ouvert, l'ouverture gêne efficacement le démontage de la pièce de protection. Dans les cas où le contour est fermé, pour être retirée de l'arbre, la pièce doit être dégagée par l'extrémité libre de l'arbre, qui est physiquement inaccessible lorsque l'arbre est monté sur le profilé. Si la pièce de protection selon la présente divulgation présente une conception qui rend difficile son démontage, ce perfectionnement le rend impossible sans démontage préalable du rouleau.
- En outre, le montage de la pièce de protection est totalement indépendant de l'entraxe qui sépare les rouleaux. Ainsi, elle présente l'avantage par rapport aux solutions existantes de parfaitement s'adapter à différentes valeurs d'entraxes de rouleaux.
- De conception simple, réalisée par moulage d'une matière plastique selon un perfectionnement, la pièce proposée présente un coût réduit et une grande fiabilité.
- De plus, selon un perfectionnement, le moyen de fixation est conçu pour être facile à monter sur le profilé, en une seule opération et sans outil. De la même façon, lorsque les rouleaux ont été préalablement retirés, le moyen de fixation est également démontable aisément et sans outil.

## Revendications

1. Pièce de protection (10) destinée à équiper un convoyeur (1), le convoyeur (1) comprenant :
- une structure comportant deux profilés latéraux (4) entre lesquels une pluralité de rouleaux (2) s'étendent transversalement,
- l'un au moins des rouleaux (2) est entraîné en rotation par un moteur, chaque rouleau (2) comportant une surface de roulement (22) et des flancs (23), chaque rouleau (2) étant monté pivotant par rapport aux profilés latéraux (4) via un arbre de montage (21), l'arbre de montage (21) comportant des portions d'extrémités (211) en saillie des deux flancs (23) aux extrémités du rouleau (2),
- au moins une courroie d'entraînement (3) reliant deux des rouleaux (2), la courroie comprenant un brin supérieur (31) et un brin inférieur (32), et, en particulier, pour chaque rouleau (2), les espaces entre le brin supérieur (31) et le brin inférieur (32) de chaque courroie (3) et le rouleau (2) définissant des zones de pincement (Z),
ladite pièce de protection (10) comprenant :
- une embase (11) comprenant une ouverture (111) configurée pour être traversée par l'une des portions d'extrémités (211) d'un des arbres de montage (21) de l'un des rouleaux (2), l'embase (11) étant intercalée entre l'un des flancs (23) du rouleau (2) et l'un des deux profilés latéraux (4),
- deux parois de protection (12) s'étendant en saillie depuis ladite embase (11) suivant la direction d'élongation du rouleau, chacune desdites parois de protection (12) s'étendant de part et d'autre dudit rouleau (2), entre le brin inférieur (31) et le brin supérieur (32) de chacune des courroies (3), de sorte à empêcher l'accès aux zones de pincement (Z) dudit rouleau (2), et
- un moyen de fixation (14) configuré pour maintenir ladite pièce de protection (1) sur un profilé latéral (4) du convoyeur (1).

2. Pièce de protection (10) selon la revendication 1, dans laquelle ladite embase (11), les deux parois de protection (12), et le cas échéant le moyen de fixation (14), font partie d'un corps monobloc.

3. Pièce de protection (10) selon l'une des revendications précédentes, dans laquelle le contour de ladite ouverture (111) de l'embase (11) est de section fermée.

4. Pièce de protection (10) selon l'une des revendications précédentes, dans laquelle l'embase comporte une rainure (112), en sur-profondeur d'une paroi de l'embase faisant face au flanc (23) du rouleau (2), ladite rainure (112) s'étendant suivant une direction médiane aux deux parois de protection (12).

5. Pièce de protection (10) selon l'une des revendications précédentes, dans laquelle les parois de protection (12) comprennent chacune une face interne (121) configurée pour être positionnée en vis-à-vis dudit rouleau (2), ladite face interne (121) de chacune des parois de protection étant concave.

6. Pièce de protection (10) selon l'une des revendications précédentes, dans laquelle le moyen de fixation (14) est configuré pour coopérer avec une zone d'accroche (41) sur le profilé latéral (4), ladite zone d'accroche (41) comportant un contour fermé, le moyen de fixation (14) coopérant avec la zone d'accroche (41) par une déformation élastique induite par un mouvement de translation de la pièce de protection (10) selon la direction d'élongation du rouleau (2).

7. Pièce de protection (10) selon l'une des revendications précédentes, dans laquelle le moyen de fixation (14) comporte deux organes d'accroche (141, 142) chacun situé de part et d'autre de l'ouverture (111) de l'embase (11), les organes d'accroche (141, 142) étant saillants de l'embase (11) du côté de l'embase opposé aux deux parois de protection, chacun des deux organes d'accroche (141, 142) étant configuré pour coopérer avec une zone d'accroche (41) du profilé latéral (4).

8. Pièce de protection (10) selon la revendication précédente, dans laquelle chaque organe d'accroche (141, 142) comprend une dent (143, 144) orientée l'une vers l'autre, chaque dent (143, 144) étant configurée pour coopérer avec un contour de la zone d'accroche (41) correspondante, chaque organe d'accroche (141, 142) s'étendant dans la continuité d'une paroi de protection (12) de façon qu'un rapprochement des deux parois de protection (12) engendre un écartement des deux dents (143, 144) l'une par rapport à l'autre.

9. Pièce de protection (10) selon l'une des revendications précédentes, laquelle étant réalisée par injection de matière plastique.

10. Convoyeur comprenant une pièce de protection (10) selon l'une des revendications précédentes, ledit convoyeur (1) comprenant en outre :
- une structure comportant deux profilés latéraux (4) entre lesquels une pluralité de rouleaux (2) s'étendent transversalement,
- l'un au moins des rouleaux (2) est entraîné en rotation par un moteur, chaque rouleau (2) comportant une surface de roulement (22) et des flancs (23), chaque rouleau (2) étant monté pivotant par rapport aux profilés latéraux (4) via un arbre de montage (21), l'arbre de montage (21) comportant des portions d'extrémités (211) en saillie des deux flancs (23) aux extrémités du rouleau (2),
- au moins une courroie d'entraînement (3) reliant deux des rouleaux (2), la courroie comprenant un brin supérieur (31) et un brin inférieur (32), et, en particulier, pour chaque rouleau (2), les espaces entre le brin supérieur (31) et le brin inférieur (32) de chaque courroie (3) et le rouleau (2) définissant des zones de pincement (Z).

11. Convoyeur (1) selon la revendication précédente, dans lequel le contour de l'ouverture (111) de l'embase (11) de la pièce de protection (10) est en tout point distant de la portion d'extrémité (211) de l'arbre de montage (21) du rouleau (2), préférentiellement d'une distance E comprise entre 0,5 et 6 mm.

12. Convoyeur (1) selon l'une des revendications 10 ou 11 dans lequel les parois de protection (12) de ladite pièce de protection (10) comprennent chacune une face interne (121) en vis-à-vis dudit rouleau (2), ladite face interne (121) étant distante dudit rouleau (2) d'une distance d comprise entre 1 et 10 mm selon une direction radiale du rouleau (2).

13. Convoyeur (1) selon l'une des revendications 10 à 12, comprenant une première et une deuxième pièces de protection (10) selon l'une des revendications 7 ou 8, la première pièce de protection (10.1) équipant un premier rouleau (2.1) et la deuxième pièce de protection (10.2) équipant un deuxième rouleau (2.2) adjacent au premier rouleau (2.1), un premier organe d'accroche (141.1) de la première pièce de protection (10.1) et un deuxième organe d'accroche (141.2) de la deuxième pièce de protection (10.2) coopérant tous deux avec une seule et même zone d'accroche (41) dudit profilé latéral (4).

14. Procédé de montage d'une pièce de protection selon l'une des revendications 1 à 9 sur un convoyeur (1), ledit convoyeur comprenant :
- une structure comportant deux profilés latéraux (4) entre lesquels une pluralité de rouleaux (2) s'étendent transversalement,
- l'un au moins des rouleaux (2) est entraîné en rotation par un moteur, chaque rouleau (2) comportant une surface de roulement (22) et des flancs (23), chaque rouleau (2) étant monté pivotant par rapport aux profilés latéraux (4) via un arbre de montage (21), l'arbre de montage (21) comportant des portions d'extrémités (211) en saillie des deux flancs (23) aux extrémités du rouleau (2),
- au moins une courroie d'entraînement (3) reliant deux des rouleaux (2), la courroie comprenant un brin supérieur (31) et un brin inférieur (32), et, en particulier, pour chaque rouleau (2), les espaces entre le brin supérieur (31) et le brin inférieur (32) de chaque courroie (3) et le rouleau (2) définissant des zones de pincement (Z),
le procédé de montage comprenant :
- Fixation de ladite pièce de protection (10) sur un profilé latéral (4) par coopération entre le moyen de fixation (14) et l'un des profilés latéraux (4),
- Passage d'une des portions d'extrémité (211) de l'arbre de montage (21) d'un desdits rouleaux (2) à travers ladite ouverture (111) de l'embase (11) de la pièce de protection (1) déjà fixée sur le profilé latéral (4).
